# EUROPEAN PATENT APPLICATION

(11) **EP 1 941 940 A1**
(43) Date of publication of application: **09.07.2008**
(21) Application number: 07100055.8
(22) Date of filing: 03.01.2007
(51) Int. Cl.: B01D 53/94, B01J 35/04, C04B 38/00, B01D 46/24, F01N 3/022, F01N 3/28

(54) **Porous substrate for use as a particulate filter for catalytic or non-catalytic soot regeneration methods**

(71) Applicant: Ford Global Technologies, LLC, Dearborn, MI 48126 (US)
(72) Inventor: Dubkov, Alexei, 52064 Aachen (DE); Boerensen, Christoph, 52072 Aachen (DE); Riesmeier, Elmar, 52066 Aachen (DE); Crosbie, Gray M., Dearborn, MI 48124-5018 (US)
(74) Representative: Drömer, Hans-Carsten

(57) **Abstract**

The invention relates to a porous substrate for use as a particulate filter preferably for automotive and non-automotive applications. The substrate employs catalytic and non-catalytic forms of soot regeneration. The substrate has a honeycomb structure and filters, during operation of said particulate filter, nanoparticles in an exhaust gas flowing through said porous substrate. The porous substrate is characterized by having a cell density in the region from 200 to 300 cpsi (31-47 channels/cm²), a wall thickness of 10 to 16 mil (250-406 μm), a porosity of 35 to 55% and a pore size of 9 to 15 μm.

## Description

The present invention relates to a porous substrate for use as a particulate filter preferably for automotive and non-automotive applications. The substrate is designed for catalytic or non-catalytic supported soot regeneration methods.

As generally known, characteristics of the substrate in a particulate filter determine its ability to filter nanoparticles in the exhaust gas as well as its resistance to flow, i.e. the pressure drop across the filter. US 2005/0042151 A1 discloses that attributes which are desired for high filtration efficiency, namely a low porosity and a small pore size, are opposite to those required for low pressure drop. In order to provide for both a high filtration efficiency and a low pressure drop, US 2005/0042151 A1 proposes a catalytic substrate for hosting a chemical reaction, wherein said substrate comprises a non woven sintered refractory ceramic composite, wherein said composite has a porosity of about 80% to about 99%, a cell density of about 50 to about 1000 cpsi (= "channels per square inch") and a wall thickness in the region from about 1 to about 20 mil (1 mil= 1 thousandth of an inch).

US 7,052,532 B1 discloses a high temperature nanofilter including a filter material composed of fibrous filter media having a plurality of fibres and granular filter media having a plurality a granules extending from the surfaces of the fibres. Said hybrid filter media has porosity greater than or equal to about 85% and a medium pore size greater than about 30 µm.

It is an object of the present invention to provide a porous substrate for use as a particulate filter preferably for automotive and non-automotive applications, which combines a relatively low back pressure with high filtration efficiency as well as a sufficient robustness of the substrate. Furthermore the substrate is designed for catalytic and non-catalytic supported soot regeneration methods.

This object is achieved according to as defined in the independent claim 1.

According to the present invention, a porous substrate for use as a particulate filter preferably for automotive and non-automotive applications has a honeycomb structure and filters, during operation of said particulate filter, nanoparticles in an exhaust gas flowing through said substrate. The substrate is characterized by having a cell density in the region from 200 to 300 cpsi (= "channels per square inch").

The present invention is based on the consideration that the dominating factors influencing the back pressure in a substrate of a particulate filter are the cell density, the wall thickness, the pore size and the porosity of the substrate. Furthermore, the inventors have found that among those 4 factors, the factors having the biggest influence on the back pressure occurring in the substrate are the cell density and the wall thickness, whereas the pore size and the porosity are of relatively low impact.

Since, however, the latter factors (i.e. pore size and porosity) significantly affect the filtration efficiency and the robustness of the filter (i.e. the filter stability) said parameters may be adjusted to relatively low values in order to ensure high filtration efficiency and high robustness of a filter.

Simultaneously, the remaining factors (i.e. the cell density and the wall thickness) have been varied and numerically analyzed, wherein also an estimation of the shear strength has been performed, considering that at relatively low cell densities, the presence of thin walls enhances a risk of reduced mechanical strength of the substrate.

The parameters of the present invention (i.e. a relatively low cell density) are chosen in spite of the fact that usually, one would expect that a higher cell density is appropriate to reduce the back pressure, because of the enhanced filtration geometric surface area for the same outer filter dimensions and therefore a thinner soot layer being created in the filter substrate.

According to a preferred embodiment, the porous substrate has a cell density in the region from 210 to 280 cpsi, more preferably in the region from 220 to 270 cpsi.

Further the substrate has, according to a preferred embodiment, a wall thickness in the region from 10 to 16 mil, more preferably in the region from 10 to 13 mil especially of 12 mil.

Furthermore, according to a preferred embodiment, said substrate has a porosity in the region from 35% to 55%, more preferably a porosity of 42% to 47, and still more preferably of 42%.

Further, according to a preferred embodiment, the substrate has a pore size in the region from 9 to 15 µm, more preferably in the region from 11 to 12 µm.

As a result of the inventive analysis, the desired combination of good back pressure characteristics with sufficient robustness and filtration efficiency at a low risk of filter clogging could be achieved with a medium cell density of 220 or 266 cpsi at a moderate wall thickness of 12 mil (1 mil = 1 thousandth of an inch).

In particular, it has been found by the inventors that the risk of clogging for such an optimized substrate (with cell density = 220 or 266 cpsi and wall thickness = 12 mil) has been significantly reduced compared to a sample having a significantly higher cell density (namely a cell density of 316 cpsi). An explanation for this effect is the smaller inlet channel diameter in a substrate having a higher cell density, leading to a higher risk of clogging on the front part of the filter and thereby an inhibition of homogenous soot distribution inside the filter. Consequently, the risk of clogging is, for the inventive substrate significantly lower than for a substrate which exhibits a high cell density, which is due to larger inlet channels in the substrate optimized according to the present invention.

Further features and advantages of the present invention can be gathered from the dependent claims.

The invention is explained in the following according to preferred embodiments illustrated in the accompanying drawings, wherein:
- Figure 1: shows a diagram which illustrates the sensitivity of the back pressure with respect to cell density, wall thickness, pore size and porosity for a clean filter sample (i.e. no soot loaded to the filter) (Fig. 1a) and a soot loaded filter sample (Fig. 1b);
- Figure 2: shows a diagram which illustrates the effect of the cell density and wall thickness on the back pressure ΔP;
- Figure 3: shows a diagram which illustrates the effect of the porosity and the pore size on the back pressure ΔP;
- Figure 4a-d: show the results of the determined pressure drop ΔP for design of experiments (DOE) variations as a function of the mass flow rate for a clean substrate (Fig. 4a) as well as for different soot loadings of 2g/L (Fig. 4b), 4g/L (Fig. 4c) and 6g/L (Fig. 4d); and
- Figure 5: shows the result of the determined pressure drop for DOE variations as a function of the soot loading and for a mass flow rate of 1.000kg/h.

The present invention is based on the consideration that the dominating factors influencing the back pressure in a substrate of a particulate filter are
a) the cell density (measured in cpsi = channels per square inch),
b) the wall thickness (measured in mil, 1 mil = 1 thousandth of an inch)
c) the pore size (measured in micrometer, µm), and
d) the porosity (measured in percent, %)
of the substrate. These factors were varied in a Latin Hypercube DOE matrix within the following boundaries:
- cell density: 200-300 cpsi
- wall thickness: 10-16 mil
- pore size: 11-15 µm; and
- porosity: 42-47%.
   For a particular substrate specified by its dimensions and material properties, the back pressure ΔP was calculated using a wall flow particulate filter back pressure model, which is based upon an evaluation of velocities inside the substrate channels and the flow-through walls corresponding to the mass flow rate and the temperature of the exhaust gas. More specifically, the methodology for the calculation of the back pressure ΔP using the wall flow particulate filter back pressure model includes
- the definition of input parameters comprising the flow conditions (mass flow rate, temperature and cold end pressure), the filter properties (material data, geometry specification) and the DPF loading state (presence of soot and/or ash being loaded into the filter), and
- the calculation of the back pressure ΔP by evaluation of the ΔP-contributors (entrance, transition, channel, wall, soot layer and exit losses).

For the ΔP calculation, a laminar channel flow is assumed, so that use is made of the Hagen-Poiseuille friction coefficient, as well as a porous wall / soot layer, so use is made of Darcy's law including the Forchheimer term. Furthermore, use is made of various coefficients for entrance, transition and exit losses based upon empirically derived equations.

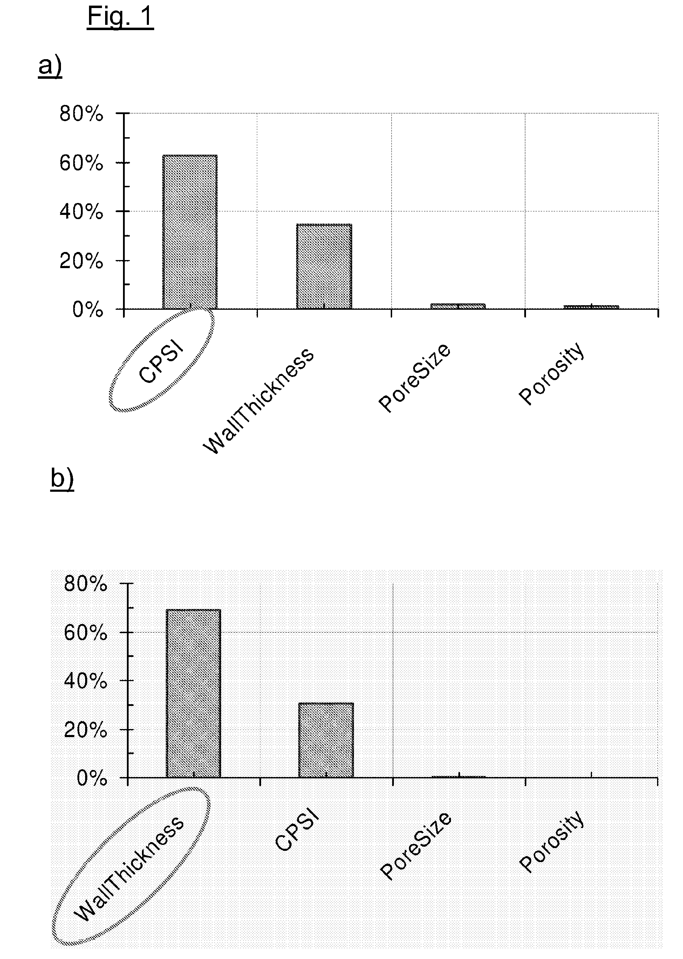

Fig. 1 illustrates a diagram showing the results of a sensitivity analysis (giving the total sensitivity in percent) for both a clean filter sample (Fig. 1a) and a soot loaded filter sample (Fig. 1b) of an 8 by 12 inch diesel particulate filter. It can be gathered from Fig. 1 that among the above factors a)-d), the cell density and the wall thickness are the most dominant factors, with the cell density being the major factor if the DPF is clean (i.e. without soot) according to Fig. 1a, and the wall thickness being the major factor if soot is loaded on the DPF according to Fig. 1b.

It is to be noted that a higher back pressure results from an increasing soot layer thickness, wherein said soot layer thickness depends on the storage capacity being a function of the wall thickness. Furthermore, it should be noted that the sensitivity of factors changes with the DPF size, since the length to diameter ratio determines the ratio of channel to wall losses and the overall DPF size also determines the velocities inside the DPF.

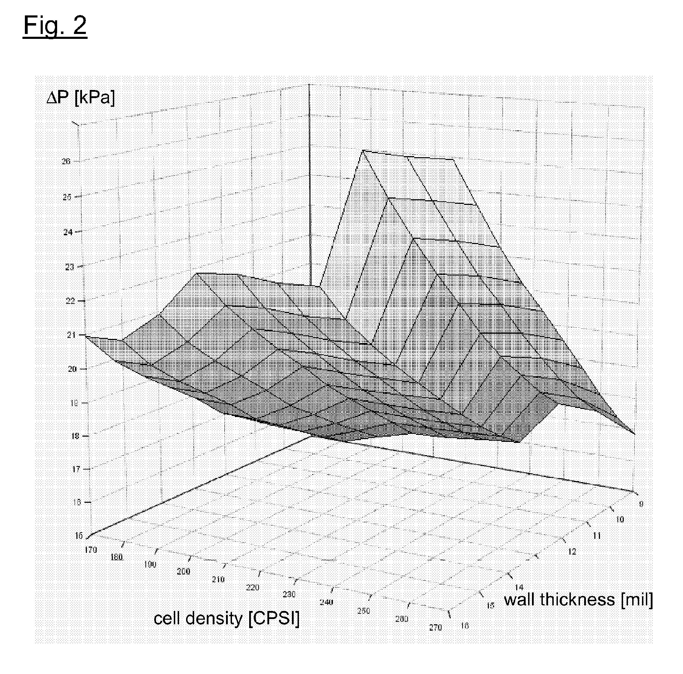

Fig. 2 illustrates the effect of the aforementioned main factors (i.e. cell density and wall thickness) on the back pressure ΔP determined for the following boundaries in an 8 by 12 inch DPF: DPF inlet temperature = 568°C, soot loading = 5g/L and MFR (= mass flow rate) = 770kg/h. It can be gathered that a low wall thickness and a low cell density generally yield the lowest back pressure for the DPF.

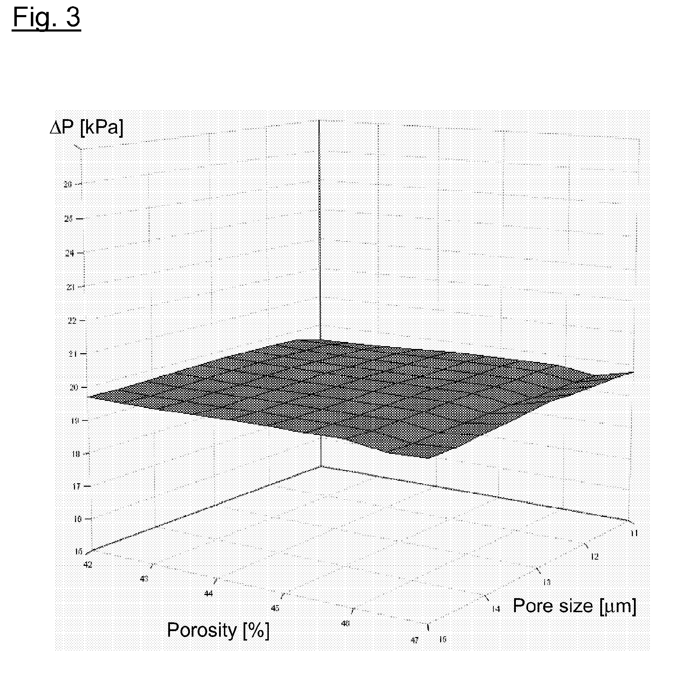

Fig. 3 shows the effect of the secondary factors (i.e. porosity and pore size) for the same boundaries and sample as in Fig. 2. It can be gathered that both the pore size and the porosity have only a secondary effect on the back pressure, which is exploited according to the present invention by adjusting these factors for achieving high filtration efficiency and high filter stability.

As a further aspect, the inventors have considered that the combination of low wall thickness (e. g. 10 mil) with low cell density (e.g. 200 cpsi) results in production problems with regard to extrusion issues. In the following, a wall flow particulate filter back pressure model is utilized in order to optimize the DPF substrate sample to maintain a low back pressure while, on the one hand, avoiding such production problems and, on the other hand, obtaining sufficient filtration efficiencies and soot storage capacities.

Tab. 1 illustrates the possible combinations of main factors and their impact on aperture ratio (ratio of open frontal area to cross-sectional area of the filter). These combinations are attributed to selected values of the cell density (varied from 178 to 316 cpsi, corresponding to a variation of the number of cells per unit side from 18 to 24) and the wall thickness (varied from 9.84 to 16 mil). Of these combinations the 12/14 mil wall thickness and 220/266 cpsi cell density combinations were chosen to be investigated in more detail. In doing so the risk of filter clogging and production problems was minimized while maintaining high storage capacity as well as excellent back pressure performance characteristics.

**Table 1:**

| wall thickness → cell density ↓ | 9.8425 mil | 12 mil | 14 mil | 16 mil |
|---|---|---|---|---|
| 178 cpsi | 35.2% (DOE) | 32.9% (DOE) | 30.9% (DOE) | 28.9% |
| 220 cpsi | 34.0% (DOE) | 31.5% (DOE) | 29.3% (DOE) | 27.1% (DOE) |
| 266 cpsi | 32.9% (DOE) | 30.2% (DOE) | 27.8% (DOE) | 25.5% (DOE) |
| 316 cpsi | 31.8% | 28.9% (DOE) | 26.4% (DOE) | 23.9% (DOE) |

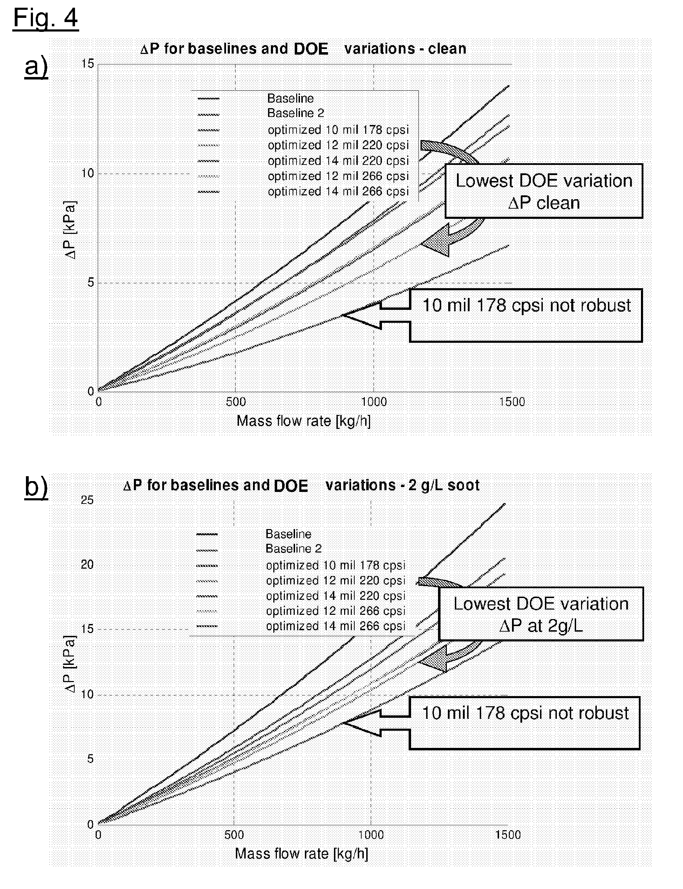

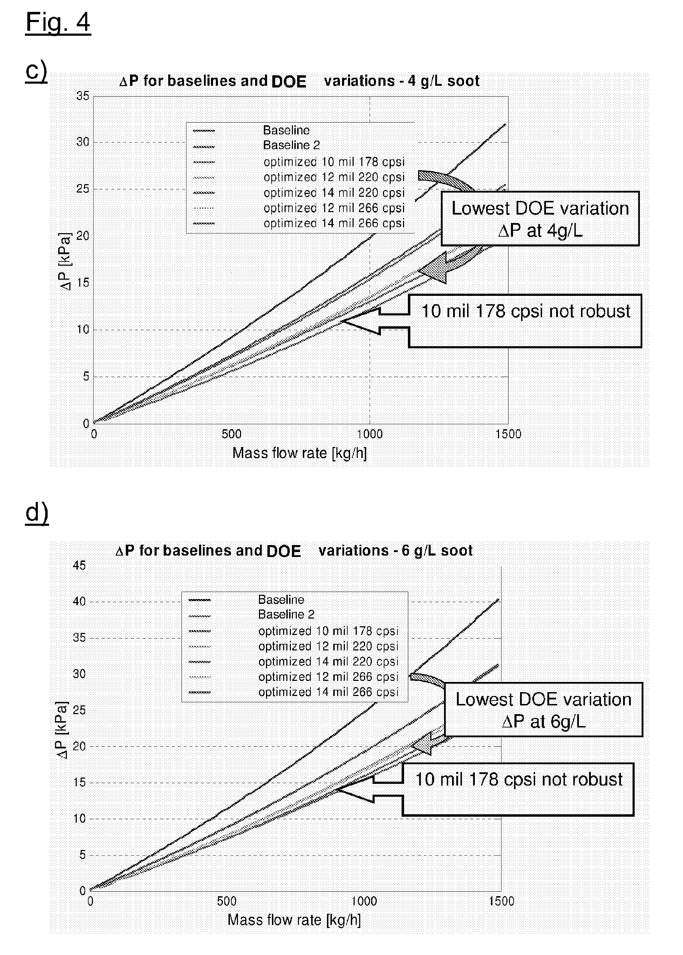

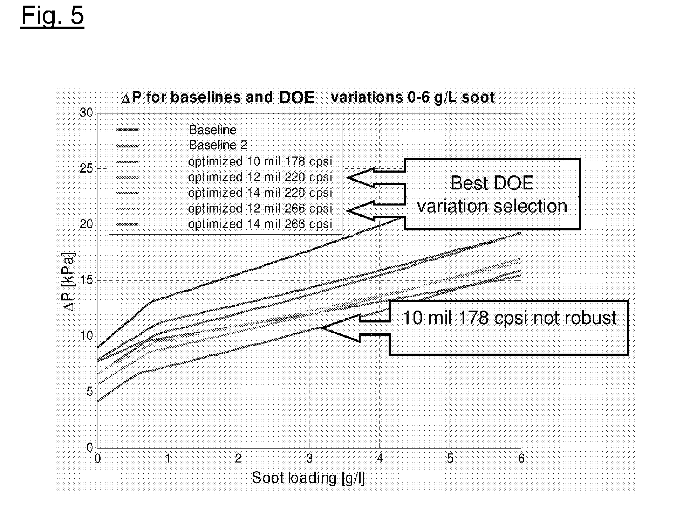

Fig. 4a-d show the results of the determined pressure drop ΔP for DOE variations as a function of the mass flow rate for a clean substrate (i.e. without soot, Fig. 4a) as well as for different soot loadings of 2g/L (Fig. 4b), 4g/L (Fig. 4c) and 6g/L (Fig. 4d). Furthermore, Fig. 5 shows the result of the determined pressure drop for DOE variations as a function of the soot loading and for a mass flow rate of 1.000kg/h.

In Fig. 4a-d and Fig. 5 the sample "baseline" has the following parameters: cell density = 178 cpsi, wall thickness = 16 mil, pore size = 11µm and porosity = 42%. The sample "baseline 2" has the following parameters: cell density = 316 cpsi, wall thickness = 10 mil, pore size = 11µm and porosity = 42%.

Considering that the sample having a wall thickness of 10 mil and a cell density of 178 cpsi is not robust, the best DOE variation selection is achieved for the sample having a wall thickness of 12 mil combined with a cell density of either 220 cpsi or 266 cpsi, respectively.

As a conclusion of the above results, an improvement of the back pressure characteristics according to the present invention is achieved by reducing the wall thickness to 12 mil while keeping the cell density at moderately low value (220 or 266 cpsi). Because of the chosen cell density, the risk of clogging is reduced with respect to e.g. a sample having a cell density of 316 cpsi while maintaining excellent back pressure characteristics performance clean and soot loaded.

According to table 2, an estimation of the shear strength has been performed depending on the substrate parameters, in particular the input cell density and the input wall thickness, while keeping porosity and pore size at constant values. It can be gathered that at relatively low cell densities of 200 cpsi, the presence of thin walls (e.g. walls of 8-10 mil) results in low shear strengths and enhances a risk of reduced mechanical strength of the substrate. A sufficient robustness could be obtained for a medium cell density of 220 cpsi or 266 cpsi and a moderate wall thickness of 12 mil.

**Table 2**

| Nominal cell density (cpsi) | Wall thickness (mil) | Calculated cell spacing (mm) | Calculated shear strength (MPa) |
|---|---|---|---|
| 200 | 16 | 1.796 | 0.902 |
| 200 | 12 | 1.796 | 0.507 |
| 200 | 10 | 1.796 | 0.352 |
| 200 | 8 | 1.796 | 0.225 |
| 220 | 16 | 1.712 | 0.992 |
| **220** | **12** | **1.712** | **0.558** |
| 220 | 10 | 1.712 | 0.387 |
| 220 | 8 | 1.712 | 0.248 |
| 266 | 16 | 1.557 | 1.199 |
| **266** | **12** | **1.557** | **0.675** |
| 266 | 10 | 1.557 | 0.468 |
| 266 | 8 | 1.557 | 0.300 |
| 300 | 16 | 1.466 | 1.352 |
| 300 | 12 | 1.466 | 0.761 |
| 300 | 10 | 1.466 | 0.528 |
| 300 | 8 | 1.466 | 0.338 |

## Claims

1. A porous substrate for use as a particulate filter preferably for automotive and non-automotive applications employing catalytic and non-catalytic forms of soot regeneration, said substrate having a honeycomb structure and filtering, during operation of said particulate filter, nanoparticles in an exhaust gas flowing through said substrate,
**characterized in that**
said substrate has a cell density in the region from 200 to 300 cpsi.

2. The substrate according to claim 1,
**characterized in that**
said substrate has a cell density in the region from 210 to 280 cpsi, more preferably in the region from 220 to 270 cpsi.

3. The substrate according to claim 1 or 2,
**characterized in that**
said substrate has a wall thickness in the region from 10 to 16 mil.

4. The substrate according to claim 1 to 3,
**characterized in that**
said substrate has a wall thickness in the region from 10 to 13 mil.

5. The substrate according to claim 1 to 4,
**characterized in that**
said substrate has a wall thickness in the region from 12 mil.

6. The substrate according to anyone of the preceding claims,
**characterized in that**
said substrate has a porosity in the region from 35% to 55.

7. The substrate according to anyone of the preceding claims,
**characterized in that**
said substrate has a porosity in the region from 42 to 47.

8. The substrate according to anyone of the preceding claims,
**characterized in that**
said substrate has a porosity in the region from 42%.

9. The substrate according to anyone of the preceding claims,
**characterized in that**
said substrate has a pore size in the region from 9 to 15 µm,.

10. The substrate according to anyone of the preceding claims,
**characterized in that**
said substrate has a pore size in the region from 11 to 12 µm.
